# EUROPEAN PATENT APPLICATION

(11) **EP 3 395 313 A1**
(43) Date of publication of application: **31.10.2018**
(21) Application number: 17466010.0
(22) Date of filing: 12.09.2017
(51) Int. Cl.: A61G 5/10, A61G 5/12

(54) **COGNITIVE ROBOT FOR REHABILITATION AND TRANSPORT**

(30) Priority: 24.04.2017 CZ 20170220
(71) Applicant: Robotsystem, s.r.o., 702 00 Ostrava-Moravská Ostrava (CZ); Haladova, Petra, 73937 Horni Bludovice (CZ)
(72) Inventor: Halada, Pavel, 736 01 Havírov-Mesto (CZ); Haladová, Petra, 739 37 Horní Bludovice (CZ)

(57) **Abstract**

Cognitive robot for institutional and home use in indoor and outdoor environment is a unique robotic technology associating in one robotic monoblock vastly different functions providing reconfigurability - guided gait rehabilitation of lower limbs, ride in standing position, ride in sitting position, moving out the user outside the robot space without assistance, function of omnidirectional maneuverability, with a highly sophisticated master control system, with capability of space-time programmability of robotic functions, and automatic centration when passing through the door - including control of transport processes by user, remotely by an assistant, and with unmanned transport capability.

## Description

### TECHNICAL FIELD

Cognitive Robot for rehabilitation and transport is from the field of versatile and multipurpose therapeutic and rehabilitation devices, designed to provide rehabilitation processes, and simultaneously transport and supporting the physical activities of partially immobile patients, to support life without assistance and maintain the physical condition of seniors

### DESCRIPTION OF THE PRIOR ART

Currently, there is no breakthrough cognitive robot in the world according to the invention - reconfigurable, physiotherapeutic and simultaneously transport robotic technology, for use in indoor and outdoor environment, with high maneuverability in confined spaces and unpaved terrain, for use in non-assisted or assisted guided gait physiotherapy of patients, together with the ability to change the function of gait physiotherapy to the function of ride in standing position (four-wheel analogy of segway), change of the function of ride in standing position to the function of ride in sitting position, with function of moving out the user from the sitting position to the standing position without assistance outside the robot space. With a highly sophisticated master control system, with capability of space-time programmability of robotic functions, automatic centration when passing through the door, with advantage of usability in institutional and home environment, with an alternative of use in indoor and outdoor environment. Furthermore, with advantage of use of modularity of electronically controlled wheel units - omnidirectional wheel units with drives and a gear mechanisms located directly in their hubs, interchangeable for wheel units with classic bantam wheels, also with built-in electric drive and gear mechanism directly in their hub.

There are currently highly sophisticated robotic devices, providing guided gait rehabilitation, with a number of cognitive elements. None of these devices, however, combines more diametrically different robotic functions in one robotic monoblock. These are single-purpose devices at a high technological and robotic level which serve only to provide physiotherapeutic processes, especially in the institutional environment. These technologies are not, at the same time, usable to provide such rehabilitation processes for tasks in everyday life outside the institutional setting and institutional treatment, to support non-assisted life, and simultaneously for full-fledge transport of users - both in in standing position (four-wheel analogy of segway) and in sitting position in case of user's fatigue, with the possibility of returning to continued gait rehabilitation of lower limbs when technological elements for standing and sitting are automatically eliminated. For example, Andago by Hocoma company (patent no. EP 158629 1 B1), or vericalization wheelchair Xeno by Otto Bock company, or Chasswheel Oy company (Finland), as well as a number of other manufacturers dispose of single-purpose devices only - use for rehabilitation processes or for use in transport processes, although with sophisticated technologies of their positioning. Through a broad global search, there has not been found any robotic technology associating the functions of rehabilitation processes with highly sophisticated cognitive elements and the functions of user transport in siting and standing position and simultaneously with the ability to support the moving out of the user from the sitting position to the standing position outside the robot space, and simultaneously with the omnidirectional maneuvering capability using the implementation of drives and gear mechanisms directly into the hubs of the wheel units of the robot.

### SUMMARY OF THE INVENTION

The above mentioned disadvantages are solved by the cognitive robot for transport and rehabilitation, consisting of two main subassemblies such as chassis and multi-purpose superstructure, the essence of which is that the chassis is formed by a chassis frame of the U-shape ground plane, in the front part of which, in its hungover ends are spring and damping torsion units with rubber elements as the end of the swing fork for the front wheel unit, while the front spring lift stroke is limited by a rubber stop which is part of the longitudinal members of the chassis frame, where on longitudinal members, the electric accumulators are stored and next to them there are telescopic columns tightly interconnected with the chassis frame;
while in the rear part of the chassis frame, there is a transom on which the drivers of electric motors are stored, and there is a accumulator charger next to them;
while in the rear part of the frame, there is further through the transom a rear wheel system with rear wheel units connected;
while into each of the longitudinal members of the chassis frame there are from the inner part constrained eyes in which a footboard is pivotally arranged that is connected to a footboard rotary drive through the footboard flexible shaft and with rotary drive shaft that is connected by a link coupling supplemented with a hose clamp, where on the opposite side there is the flexible footboard shaft running through the center of the hollow elongated pin of the footboard ended by a pressed collar which is connected with the footboard through a shaped projection fitting in the shaped recess of the footboard;
while there are fixed stops in the longitudinal members in the chassis frame above the footboard level;
while the multipurpose superstructure is firmly connected to the retractable part of telescopic columns through the U-shape superstructure frame into which the axial composition is embedded parallel with the transom as part of the seating;
while parallelograms (are further embedded into each of the longitudinal members of the frame, as supporting elements of elbow rests, supplemented by the extensions which are ended by control panels; while one arm of the parallelogram is in the lower part supplemented with an arm lever at the end of which a motion nut is pivotally mounted into which engages a motion screw driven by rotary drive with an alignment coupling which is pivotally attached to the superstructure frame in the extension pins;
while the motion screw is arranged in the radial bearing and in the axial bearing using the support surface of the alignment coupling and an inserted ring on the opposite side; while further, the parallelogram arms are connected with a rocker with the rear part of which is firmly connected a vertical hollow pin on which there is in the radial bearing pivotally arranged an extension of the elbow rest, where further to a limited extent there is the elbow rest pivotally arranged around the horizontal pin of the extension; while in the elbow rest lever, there is a swinging pin placed connecting through a rod the positioning cone with the inserted compression spring; while the positioning cone is arranged in the guiding line of the elbow rest extension, and the positioning cone fits into the shaped plate which is firmly interconnected with the hollow pin;
while the seating consist of a seat and a backrest, mutually interconnected by the axial composition; while the axial composition is formed by the fixed pin that is arranged in the superstructure frame through embedded mounts, where in the central part of the fixed pin, there is the backrest pivotally placed, which axial composition is defined by a fork of the seat, which is on the fixed pin again arranged pivotally in the housings with stops on the inner diameter fitting on the levers with stops on the outer diameter, simultaneously arranged on the fixed pin and controlled by the linear actuators of the seat;
while the other position control system of the seat consists of a rotary drive of positioning on which output shaft there is connected a clamp coupling of the flexible shaft of the seat, ended by the collar with a carrier; while the carrier passes through the shaped recess of the fixed pin, and it is firmly connected with the housing with stops which is part of each of the fork arms of the seat;
while the backrest is positioned by a linear actuator of positioning pivotally arranged in the superstructure frame.

Furthermore, it is advantageous when the rear wheel system contains in the axis of cross member a longitudinally and firmly inserted overhung pin with a square cross-section which is a part of the spring and damping torsion unit with rubber elements, on which the rear axle is pivotally mounted, where the rear axle consists of a cross beam at the ends of which there are vertical housings in which in the bearings, there are rotatably mounted attachments with a vertical pin, where each of these attachments with vertical pin is ended by a square profile that is part of the spring and damping torsion unit with rubber elements, followed by the swing fork in which the rear wheel unit is arranged.

Furthermore, it is advantageous when the rear wheel system contains rear wheel units which are arranged in the overhung ends of the spring and damping torsion units as the end of the swing forks in the mounts in front of the verticals of the chassis frame next to which there are telescopic columns placed.

Furthermore, it is advantageous when the front wheel units are formed of omnidirectional wheels with electric drives.

Furthermore, it is advantageous when the rear wheel units are formed of omnidirectional wheels with electric drives.

Furthermore, it is advantageous when the rear wheel units of non-driven rear wheels.

Furthermore, it is advantageous when the Cognitive Robot for rehabilitation and transport is equipped with covers.

Furthermore, it is advantageous when each elbow rest is connected with a handle on its extension toward the onward part of the cognitive robot, and the handles are ended by small control panels with embedded directional and speed controls.

The cognitive robot for institutional and home use in indoor and outdoor environment is a unique robotic technology associating in one robotic monoblock vastly different functions providing reconfigurability - guided gait rehabilitation of lower limbs, ride in standing position, ride in sitting position, moving out the user outside the robot space without assistance, function of omnidirectional maneuverability, with a highly sophisticated master control system, with capability of space-time programmability of robotic functions, and automatic centration when passing through the door - including control of transport processes by user, remotely by an assistant, and with unmanned transport capability.

Significant advantage of the proposed robot according to the invention is its high multi-functionality, given by its ability to associate several diametrically different functions in one robotic monoblock. The function of guided gait rehabilitation of lower limbs, with the possibility of using the distance medicine system.

### OVERVIEW OF DRAWINGS

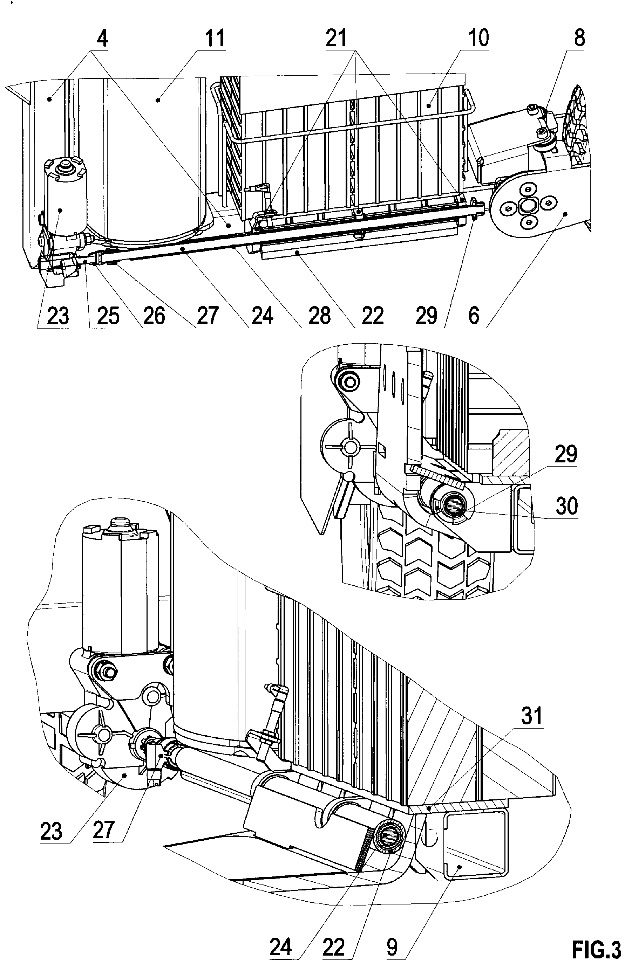

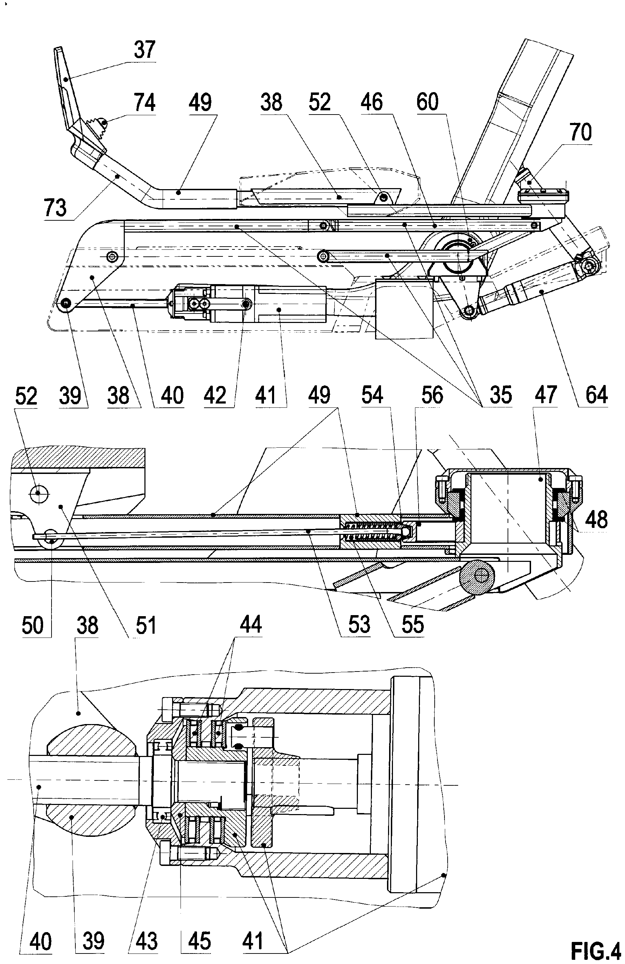

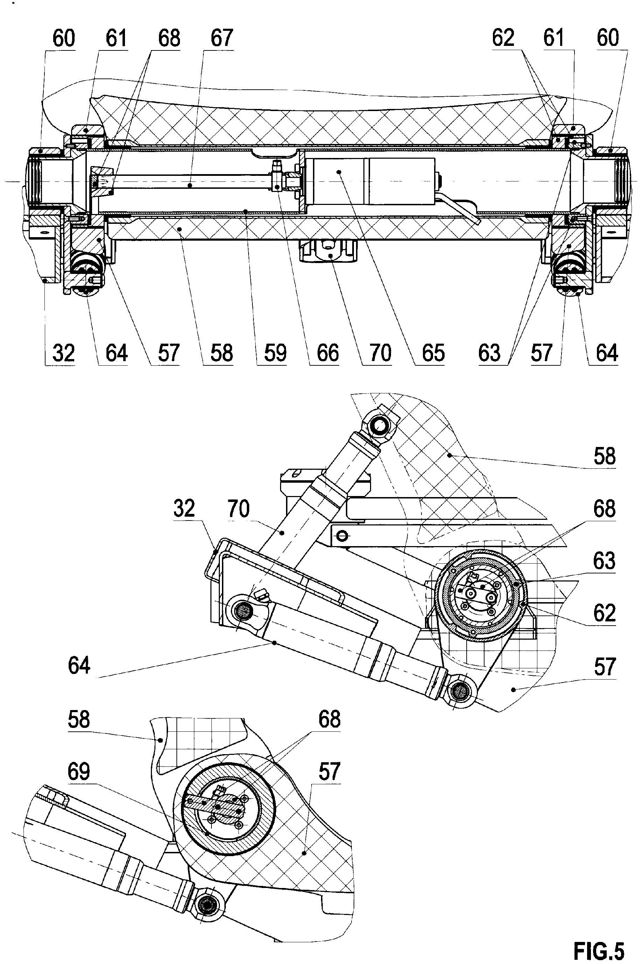

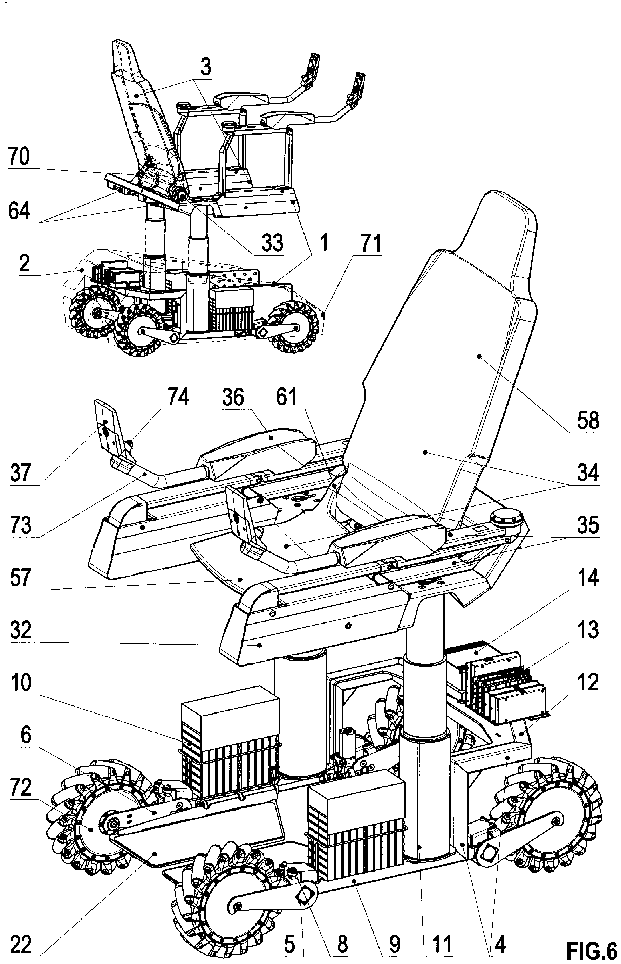

The accompanying drawings show embodiments of the invention where Fig. 1 is a front and rear overall axonometric view of the cognitive robot for rehabilitation and transport in a variant with front wheels with an electric motor, and non-driven rear wheels; on the Fig. 2 above there is a cross section of the construction node of the rear wheel system with non-driven rear wheel; on the Fig. 2 below there is a cross section of the construction node of the front wheel unit formed by wheels with electric motors; on the Fig. 3 there are assemblies with arrangement of rotary drive and footboards; on the Fig. 4 there are assemblies on a multipurpose superstructure; on the Fig. 5 there are details of the seating and control of the position of the elements on it; Fig. 6 is an alternative of the cognitive robot chassis for smoother and flatter surface with omnidirectional wheels with an electric motor.

### AN EXAMPLE OF THE INVENTION VERSION

Cognitive robot 1 for rehabilitation and transport consists of two main subassemblies which are the chassis 2 and multipurpose superstructure 3.

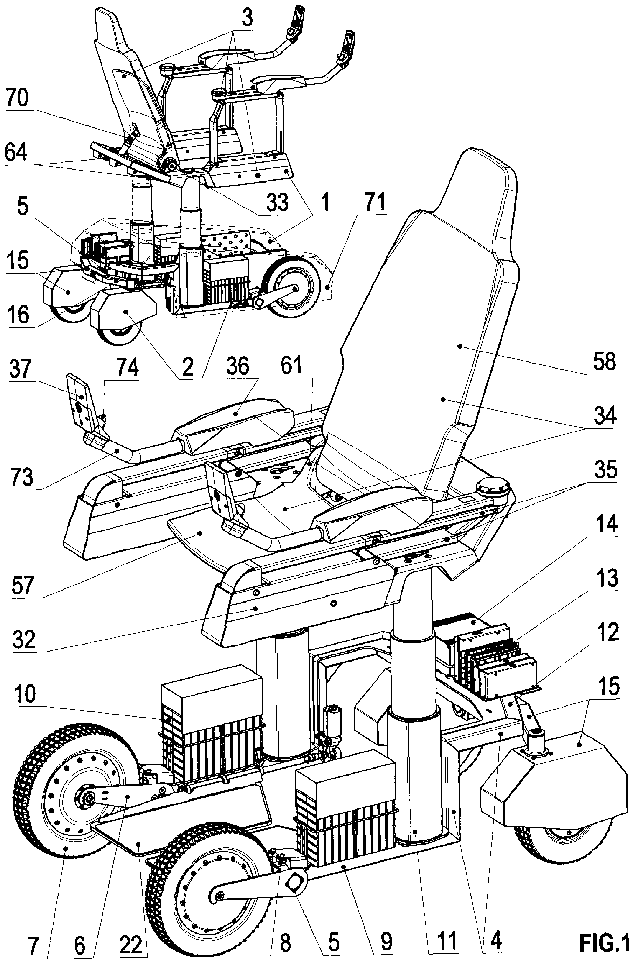

In the embodiment of Fig. 1, the main part of the chassis 2 is a chassis frame 4 of the U ground plane shape. In the front part, at its overhung ends there are spring and damping torsion units 5 with rubber elements as the end of the swing forks 6 for wheels with in-wheel electric drive for the front wheel unit 7; while the front rear fork 6 lift stroke is limited by a rubber stop 8 which is part of the longitudinal members 9 of the chassis frame 4. On the longitudinal members 9, there are electric accumulators 10 stored, and next to them there are telescopic columns 11. In the rear part of the chassis frame 4 there is a transom 12 on which drivers 13 of electric motors are stored, and there is a accumulator charger 14 next to them.

In the transom 12 axis, there is longitudinally constrained a overhung pin with a square cross section which is a part of spring and damping torsion unit 5 with rubber elements on which the rear axle 15 is pivotally mounted.

The rear axle 15 comprises a transverse beam 16 at the ends of which there are vertical housings 17 in which in the bearings 18 there are attachments rotatably mounted with a vertical pin 19. Each of the attachments with a vertical pin 19 which is a part of the spring and damping torsion unit 5 with rubber elements followed by the swing fork 6. Non-driven rear wheel 20 is arranged on each swing fork 6.

In each of longitudinal members 9 of the chassis frame 4 there are from the inner part constrained eyes 21 in which a footboard 22 is pivotally arranged that is connected to a footboard rotary drive 23 through the flexible footboard shaft 24 and with rotary drive shaft 25 that is connected by a link coupling 26 supplemented with a hose clamp 27. On the opposite side there is the flexible footboard shaft 24 running through the center of the hollow elongated pin 28 of the footboard 22 ended by a pressed collar 29 which is connected with the footboard through a shaped projection 30 fitting in the shaped recess of the footboard 22; while there are fixed stops 31 in the longitudinal members 9 in the chassis frame 4 above the footboard 22 level.

The multipurpose superstructure 3 is firmly connected to the retractable part of telescopic columns 11 through the U-shape superstructure frame 32 into which the axial composition 33 is embedded parallel with the transom 12 as part of the seating 34.

Further, to each of the longitudinal members of the superstructure frame 32, there are embedded the parallelogram 35 as supporting elements of elbow rests 36 supplemented by the extensions which are ended by control panels 37. One arm of the parallelogram 35 is in the lower part supplemented with an arm lever 38 at the end of which a motion nut 39 is pivotally mounted into which engages a motion screw 40 driven by rotary drive 41 with an alignment coupling which is pivotally attached to the superstructure frame 32 in the extension pins 42; while the motion screw 40 is arranged in the radial bearing 43 and in the axial bearing 44 using the support surface of the alignment coupling and an inserted ring 45 on the opposite side.

Parallelogram arms are connected with a rocker 46 with the rear part of which is firmly connected a vertical hollow pin 47 on which there is in the radial bearing 47 pivotally arranged an extension 49 of the elbow rest. The elbow rest 36 is to a limited extent pivotally arranged around the horizontal pin 50 of the extension 49; while in the elbow rest lever 51 there is a swing pin 52 placed connecting through a rod 53 the positioning cone 54 with the inserted compression spring 55. The positioning cone 54 is arranged in the guiding line of the elbow rest extension 49, and the positioning cone 54 fits into the shaped plate 56 which is firmly interconnected with the hollow pin 47.

The seating 34 consist of a seat 57 and a backrest 58, mutually interconnected by the axial composition 33; while the axial composition 33 is formed by the fixed pin 59 that is arranged in the superstructure frame 32 through embedded mounts 60. in the central part of the fixed pin 59, there is the backrest 58 pivotally placed, which axial composition is defined by a fork 61 of the seat, which is on the fixed pin again arranged pivotally 59 in the housings 62 with stops on the inner diameter fitting on the levers with stops 63 on the outer diameter, simultaneously arranged on the fixed pin 59 and controlled by the linear actuators 64 of the seat. The other position control system of the seat 57 consists of a rotary drive 65 of positioning on which output shaft there is connected a clamp coupling 66 of the flexible shaft 67 of the seat, ended by the collar with a carrier 68; while the carrier 68 passes through the shaped recess 69 of the fixed pin 59, and it is firmly connected with the housing 62 with stops, which is part of each of the fork arms 61 of the seat.

The backrest 58 is positioned by a linear actuator 70 of positioning that is pivotally arranged in the superstructure frame 32.

The whole device is suitably equipped with covers 71, according to functional and design needs.

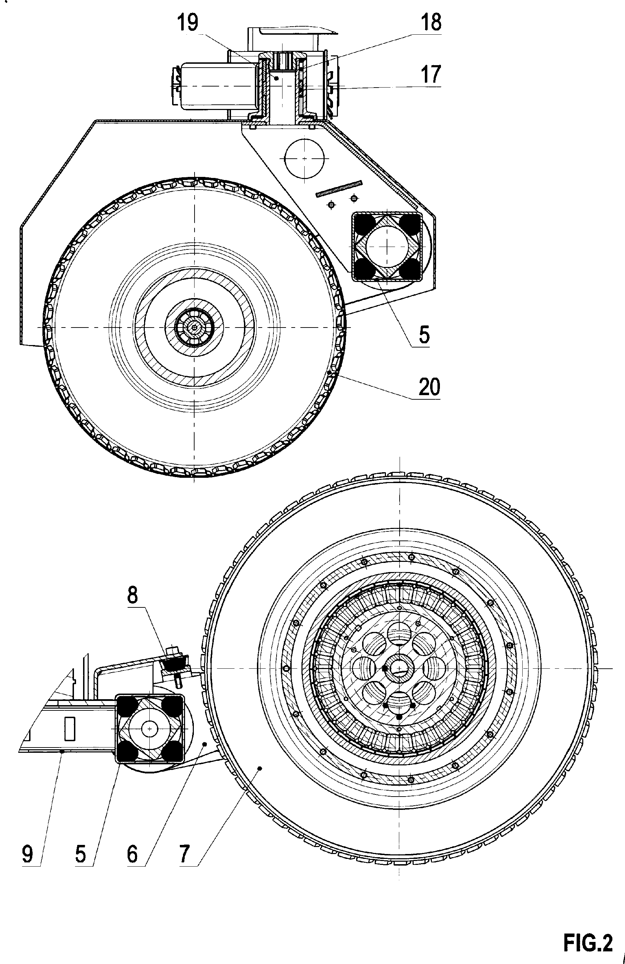

The alternative according to the Figure 2 is an embodiment of the cognitive robot 1 with omnidirectional wheels with electric drives. Differences in the wheel embodiment are particularly at the rear part of the chassis.

Here is eliminated the transverse beam 16 serving to store non-driven rear wheels 20, and the same suspenders as for the rear omnidirectional wheels with electric drives are sufficient, with that in the same way as in the front part, the omnidirectional wheels in the rear part are arranged in the overhung ends of the spring and damping swinging units 5 as the ends of the swing forks 6 in the mounts in front of the verticals of the chassis frame 4, next to which there are telescopic columns 11 placed.

Each extension of the elbow rest 49 is connected with a handle 73 on its extension toward the onward part of the walker, and the handles 73 are ended by small control panels 37 with embedded directional and speed controls 74.

### Functions

The cognitive robot 1 is intended for guided gait rehabilitation processes, and simultaneously for ride in standing and sitting position with the ability of moving out the user from the sitting position outside the robot space, simultaneously for support of life without assistance with the advantage of using omnidirectional movement and highly sophisticated cognitive elements, significantly expanding the robot's basic functions.

The resulting robot functions are associated in one robotic monoblock.

The user's mobility is ensured by the driven chassis 2, other functions are provided by the multipurpose superstructure 3.

First subassembly - chassis 2 is intended for the movement of the cognitive robot 1 for rehabilitation and transport with the user being able to move inside his/her own lower limbs or using ride in the standing position on the footboards 22.

The second subassembly - multipurpose superstructure 3 is used to position and keep the user in standing position including rehabilitation or recreational support for the disabled person. The supporting part of the chassis 2 is chassis frame 4 of the U ground plane shape on which are attached various functional extensions.

In the chassis 2, there are in various locations used spring and damping torsion units 5 with rubber elements, and the steering is enabled by two driven wheels 7 with the electric motor installed, with the chassis being supplemented with towing non-driven rear wheels 20.

In front part of the chassis frame 4, in the end portions of its longitudinal members 9, there are mounts for accommodating torsional and damping torsion units 5 with rubber elements, including front spring forks 6 into which the driven wheels 7 are stored with in-wheel electric motor; while the stroke at each wheel is limited by a rubber stop 8 that is attached to the chassis frame 4.

Furthermore, there are electric accumulators 10 on the longitudinal members 9 of the chassis frame 4, and next to them tightly interconnected with the chassis frame 4 there are telescopic columns 11 used to position the multi-purpose superstructure 3, and the controls of the electric motors and 13 and the accumulator charger 14 are stored next to each other on the transom 12 of the chassis frame 4.

The traversability of axles is made possible by the swing rear axle 15 represented by the transverse beam 16 coupled by a horizontal pin in the middle of the transom 12 through the torsional and damping torsion unit 5 with rubber elements. At the ends of the transverse beam 16, there are horizontal housings 17; while into each of them in the bearings 18 there is a vertical pin 19 placed which is a part of the towing hitch of the rear wheel including a spring and damping torsion unit 5 with rubber elements, including the swing fork 6 into which the non-driven rear wheel 20 is inserted.

This solution through the swing rear axle 15 allows crossing over a greater unevenness without the problem of front driven wheels 7 with in-wheel electric motor, and furthermore, the non-driven rear wheel 20 stored pivotally in the vertical pin 19 with eccentricity towards it, enables spontaneous directional rotation according to the direction of travel, while the direction and speed of driving are determined only by the front driven wheels 7 with on-wheel electric motor.

Two modes - the third one is sitting in the seating - of transport are enabled by the footboards 22, with their positioning options in the 90 degree range, alternatively while walking, further in the standing and sitting position using the footboards 22. The footboards 22 hung in eyes 21 which are part of the longitudinal members 9 of the chassis frame 4, and the axis of rotation is the hollow elongated pin 28 in which there is the flexible shaft 24 mounted interconnecting the footboard rotary drive 23 with the footboards 22; while the other flexible footboard shaft 24 is connected with the rotary drive shaft 25 by the link coupling 26 with a hose clamp 27, as it is connected with the footboard 22 by means of pressed collar 29 with a shaped protrusion 30 engaging the shape of the footboard 22. The flexible shaft 24 is used to control the footboard 22 for user and security reasons. In the lower position, the footrest is positioned with a stop 31 on the longitudinal members 9 of the chassis frame 4.

The third user transport function, already mentioned above, is the sitting in the seating 34 which is part of the multi-purpose superstructure 3 which supporting part is the superstructure frame 32 into which the axial composition 33 is incorporated forming swinging and adjustable connection of the seat 57 and the backrest 58 serving for positioning the user. The supporting part of the axial composition 33 is the fixed pin 59 at the ends of which are the mounts 60 firmly connected to the superstructure frame 32, and in the middle part there is pivotally arranged the backrest 58 which is axially delimited by the fork 61 of the seat.

Into each of the arms of the fork 61 of the seat, there is a housing 62 with stops inserted position can be changed by the swinging movement of the lever 63 with stops controlled by the linear actuator 64 of the seat which makes it possible to independently change the lower - sitting position of the seat 57; while the position of the backrest 58 can be independently changed by the linear actuator 70 of positioning that is pivotally arranged between the backrest 58 and the superstructure frame 32.

While walking or standing on footboards 22 it is necessary for the seat 57 to be lifted. This 90 degree rotation is by allowed rotary drive 65 of positioning; while the rotary drive 65 of positioning controls the position of one of the housings 62 with stops arranged in the fork 61 of the seat, via a flexible seat shaft 67 acting through a moment on the collar 68 with a carrier that is firmly connected to the housing 62 with stops, and passing through the shaped recess 69 of the fixed pin 59. The flexible seat shaft 67 is connected with the output shaft of the rotary drive 65 of positioning through the clamp coupling 66, and it is pressed into the collar 68 with a carrier.

The cognitive robot 1 for rehabilitation and transport enables the support when lifting the user from sitting to standing position on the footboards 22, or walking. This is mainly done by setting up the telescopic columns 11 of the chassis 2, thereby determining the starting position of user in sitting position. As a support system for the user to move from sitting to standing position, there are the lateral parallelograms 35 determined which are arranged in the side walls of the U-shape superstructure frame 32; while the parallelograms 35 are designed to position the elbow rests 36. Movement of parallelograms 35 is performed by the rotary drive 41 with alignment coupling which is pivotally placed in the superstructure frame 32, and it is arranged in the side walls of the superstructure frame 32 through the extension pin 42 rigidly connected thereto. The torque is transmitted to the motion screw 40 followed by the motion nut 39 that is pivotally placed in the arm lever 38 of the parallelogram; while the elbow rest 36 is pivotally placed with limitation of stroke in extension 49 of the elbow rest at the end of which the control panel 37 is integrated serving for status check and control of the cognitive robot 1. The motion screw 40 is arranged in the radial bearing 43 and in the axial bearing 44, where the support surface of the rotary drive 41 with alignment coupling is used, and in the opposite direction, the axial bearing leans against the inserted ring 45. At the end of the parallelogram 35 arms, there is the rocker 46 arranged pivotally, in the rear overhung part of which the vertical hollow pin 47 is firmly attached carrying the extension 49 of the elbow rest over the radiaxial bearing 48. Swinging movement around the hollow pin 47 allows the user to adjust the position of the elbow rests 36; while re-positioning and positioning is achieved by raising the respective elbow rest 36 around the swing pin 52 of the extension 49 of the elbow rest, while the corresponding movement of the elbow rest lever 51 causes movement of the horizontal pin 50 to which the rod 53 is attached having at the opposite end a positioning cone 54 fitting by force of the compression spring 55 into the shaped plate 56 that is firmly connected to the superstructure frame 32.

The cognitive robot 1 for rehabilitation and transport is provided with covers 71 for functional and design reasons.

An alternative to the chassis 2 of the cognitive robot 1 for smoother and even surfaces, especially inside buildings, can be a chassis 2 with omnidirectional wheels with electric motor. In such case, there is the rear axle 16 eliminated, in the front part there stays only the swing fork 6, only in place of the non-driven rear wheels 20 there are the omnidirectional wheels with electric motor incorporated. In the rear part of longitudinal members 9, there are swing forks 6 attached to the chassis frame 4 in the spot of vertical beam, and the suspension of wheels via swing fork, as well as the built-in omnidirectional wheels with electric motor are the same as in the front of the chassis 2.

Both alternatives of the cognitive walker 1 allow user control via control panels 37, supplemented with directional and speed controls 74 which are located at the front, at the end of the handles 73 which are the ends of both extensions 49 of the elbow rests.

### INDUSTRIAL USE

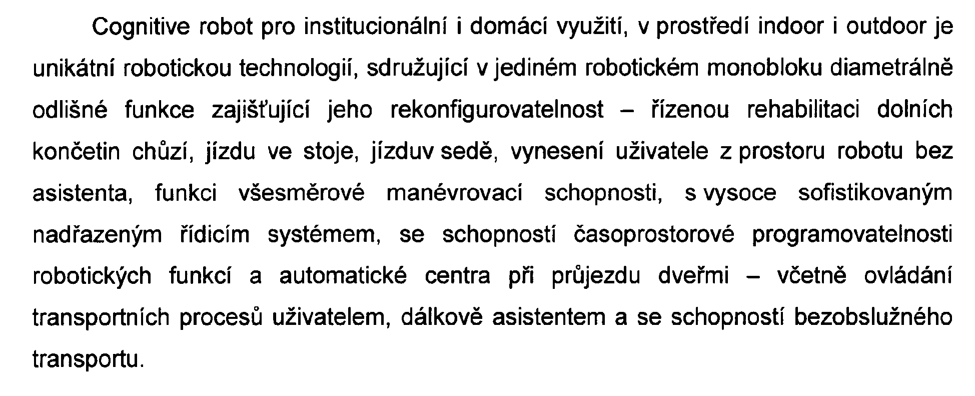

### LIST OF THE POSITIONS USED

1) cognitive robot for rehabilitation and transport
2) chassis
3) multipurpose superstructure
4) chassis frame
5) spring and damping torsion unit with rubber elements
6) swing fork
7) front wheel unit, and 7') rear wheel unit
8) rubber stop
9) longitudinal member
10) accumulator
11) telescopic column
12) transom
13) drivers of electric motors
14) accumulator charger
15) front axle
16) transverse beam
17) vertical housing
18) bearing
19) vertical pin
20) non-driven rear wheel
21) eye
22) footboard
23) footboard rotary drive
24) footboard flexible shaft
25) rotary drive shaft
26) link coupling
27) hose clamp
28) hollow elongated pin
29) pressed collar
30) shaped projection
31) stop
32) superstructure frame
33) axial composition
34) seating
35) parallelogram
36) elbow rest
37) control panel
38) arm lever
39) motion nut
40) motion screw
41) rotary drive with an alignment coupling
42) extension pin
43) radial bearing
44) axial bearing
45) inserted ring
46) rocker
47) hollow pin
48) radiaxial bearing
49) elbow rest extension
50) horizontal pin
51) elbow rest lever
52) swing pin
53) rod
54) positioning cone
55) compression spring
56) shaped plate
57) seat
58) backrest
59) fixed pin
60) mount
61) fork of the seat
62) housings with stops
63) lever with stops
64) linear actuator of the seat
65) rotary drive of positioning
66) clamp coupling
67) flexible shaft of the seat
68) collar with a carrier
69) shaped recess
70) linear actuator of positioning
71) covers
72) handle
73) directional and speed control
100) rear wheel system

## Claims

1. The cognitive robot (1) for rehabilitation and transport consisting of two main subassemblies which are the chassis (2) and multipurpose superstructure (3), **characterized in that** the chassis (2) is formed by a chassis frame (4) of the U ground plane shape in which front part at its overhung ends there are spring and damping torsion units (5) with rubber elements as the end of the swing forks (6) for the front wheel units (7); while a front rear fork (6) lift stroke is limited by a rubber stop (8) which is part of the longitudinal members (9) of the chassis frame (4), where electric accumulators (10) are stored, and next to them there are telescopic columns (11) tightly interconnected with the chassis frame (4); while in the rear part of the chassis frame (4) there is a transom (12) on which drivers (13) of electric motors are stored, and there is a accumulator charger (14) next to them;
while a rear wheel system (100) with rear wheel units (7') is further connected though the transom (12) in the rear part of the frame (4);
while in each of longitudinal members (9) of the chassis frame (4) there are from the inner part constrained eyes (21) in which a footboard (22) is pivotally arranged that is connected to a footboard rotary drive (23) through the flexible footboard shaft (24) and with rotary drive shaft (25) that is connected by a link coupling (26) supplemented with a hose clamp (27), where on the opposite side there is the flexible footboard shaft (24) running through the center of the hollow elongated pin (28) of the footboard (22) ended by a pressed collar (29) which is connected with the footboard through a shaped projection (30) fitting in the shaped recess of the footboard (22); while there are fixed stops (31) in the longitudinal members (9) in the chassis frame (4) above the footboard (22) level;
while the multipurpose superstructure (3) is firmly connected to the retractable part of telescopic columns (11) through the U-shape superstructure frame (32) into which the axial composition (33) is embedded parallel with the transom (12) as part of the seating (34);
while parallelograms (35) are further embedded into each of the longitudinal members of the superstructure frame (32), as supporting elements of elbow rests (36), supplemented by the extensions which are ended by control panels (37); while one arm of the parallelogram (35) is in the lower part supplemented with an arm lever (38) at the end of which a motion nut (39) is pivotally mounted into which engages a motion screw (40) driven by rotary drive (41) with an alignment coupling which is pivotally attached to the superstructure frame (32) in the extension pins (42); while the motion screw (40) is arranged in the radial bearing (43) and in the axial bearing (44) using the support surface of the alignment coupling and an inserted ring (45) on the opposite side;
while further, the parallelogram arms are connected with a rocker (46) with the rear part of which is firmly connected a vertical hollow pin (47) on which there is in the radial bearing (47) pivotally arranged an extension (49) of the elbow rest, where further to a limited extent there is the elbow rest (36) pivotally arranged around the horizontal pin (50) of the extension (49); while in the elbow rest lever (51) there is a swing pin (52) placed connecting through a rod (53) the positioning cone (54) with the inserted compression spring (55); while the positioning cone (54) is arranged in the guiding line of the elbow rest extension (49), and the positioning cone (54) fits into the shaped plate (56) which is firmly interconnected with the hollow pin (47);
while the seating (34) consist of a seat (57) and a backrest (58), mutually interconnected by the axial composition (33); while the axial composition (33) is formed by the fixed pin (59) that is arranged in the superstructure frame (32) through embedded mounts (60), where in the central part of the fixed pin (59), there is the backrest (58) pivotally placed, which axial composition is defined by a fork (61) of the seat, which is on the fixed pin again arranged pivotally (59) in the housings (62) with stops on the inner diameter fitting on the levers (63) with stops on the outer diameter, simultaneously arranged on the fixed pin (59) and controlled by the linear actuators (64) of the seat; while the other position control system of the seat (57) consists of a rotary drive (65) of positioning on which output shaft there is connected a clamp coupling (66) of the flexible shaft (67) of the seat, ended by the collar (68) with a carrier; while the carrier passes through the shaped recess (69) of the fixed pin (59), and it is firmly connected with the housing (62) with stops, which is part of each of the fork arms (61) of the seat;
while the backrest (58) is positioned by a linear actuator (70) of positioning that is pivotally arranged in the superstructure frame (32).

2. The cognitive robot (1) for rehabilitation and transport according to the claim 1 **characterized in that** the rear wheel system (100) contains in the axis of the transom (12) a longitudinally and firmly threaded pivot with a square cross section which is a part of the torsion unit (5) with rubber elements, on which a rear axle (15) is arranged, where the rear axle (15) comprises a transverse beam (16) at the ends of which there are vertical housings (17) in which in the bearings (18) there are attachments rotatably mounted with a vertical pin (19), where each of these attachments (19) with vertical pin is ended by a square profile that is part of the spring and damping torsion unit (5) with rubber elements, followed by the swing fork (6) in which the rear wheel unit (7') is arranged.

3. The cognitive robot (1) for rehabilitation and transport according to the claim 1 **characterized in that** the rear wheel system (100) contains rear wheel units (7') which are arranged in the overhung ends of the spring and damping swinging units (5) as the end of the swing forks (6) in the mounts in front of the verticals of the chassis frame (4), next to which there are telescopic columns (11) placed.

4. The cognitive robot (1) for rehabilitation and transport according to the claim 1 **characterized in that** the front wheel units (7) are formed of omnidirectional wheels with electric drives.

5. The cognitive robot (1) for rehabilitation and transport according to the claim 1 **characterized in that** the front wheel units (7) are formed of wheels with electric drives.

6. The cognitive robot (1) for rehabilitation and transport according to the claim 1 and 3 **characterized in that** the rear wheel units (7') are formed of omnidirectional wheels with electric drives.

7. The cognitive robot (1) for rehabilitation and transport according to the claim 1 and 2 **characterized in that** the rear wheel units (7') are formed of non-driven rear wheels (20).

8. The cognitive robot (1) for rehabilitation and transport according to the claim 1 **characterized in that** it is equipped with covers (71).

9. The cognitive robot (1) for rehabilitation and transport according to the claim 1 **characterized in that** each extension of the elbow rest (49) is connected with a handle (73) on its extension toward the onward part of the walker, and the handles (73) are ended by small control panels (37) with embedded directional and speed controls (74).
